# EUROPÄISCHE PATENTSCHRIFT

(11) **EP 2 527 260 B1**
(45) Veröffentlichungstag und Bekanntmachung des Hinweises auf die Patenterteilung: **28.08.2013**
(21) Anmeldenummer: 12002812.1
(22) Anmeldetag: 21.04.2012
(51) Int. Cl.: B65B 43/52, B65B 43/54, B65B 65/02, B65G 35/08, B65B 9/04

(54) **Vorrichtung zum Befüllen von Behältern**
Apparatus for filling containers
Machine pour le remplissage de récipients

(30) Priorität: 25.05.2011 DE 102011103152
(43) Veröffentlichungstag der Anmeldung: 28.11.2012
(73) Patentinhaber: Hamba Filltec GmbH & Co. KG, 66130 Saarbrücken (DE)
(72) Erfinder: Junk, Martin, 66636 Tholey (DE)
(74) Vertreter: Ostriga Sonnet Wirths & Vorwerk

(56) Entgegenhaltungen:
- EP-A1- 0 995 700
- EP-B1- 1 268 319
- DE-U1- 20 010 791
- US-A- 4 633 998
- US-B1- 6 170 634
- US-B2- 7 500 435

## Beschreibung

Die Erfindung betrifft eine Vorrichtung zum Befüllen von Behältern, insbesondere von Flaschen oder Bechern, mit Nahrungs- und Genussmitteln, insbesondere mit dünnflüssigen bis pastösen Molkerei-und Fettprodukten, Säften, Wässern oder dergleichen, mit einem Obertrum, einem Untertrum und mit Ober- und Untertrum verbindenden Seitentrümern, mit einer Vielzahl von endlos antriebsmittelfrei aneinander angeordneten Tragelementen, die endlos durch die Vorrichtung vorbei an Arbeitstationen und entlang der Trümer geführt sind und deren Verbund untereinander wegen der Führung entlang zumindest eines Seitentrums aufgelöst ist

In der Regel werden die zu befüllenden Behälter im jahrezehntelang erprobten und bewährten, jedoch nicht gattungsgemäßen Stand der Technik in Tragelemente eingesetzt, die unter einander durch ein Endlosfördermittel, wie eine Förderkette verbunden sind und endlos durch die Abfüllvorrichtung geführt werden. Diese Antriebsart ist zuverlässig und gewährleistet einen festen Verbund der Tragelemente untereinander. Die Tragelemente sind kontrolliert beschleunigbar und verzögerbar, was insbesondere hinsichtlich der hohen Taktraten, mit welchen die Tragelemente durch die Abfüllvorrichtung bewegt werden, erforderlich ist.

Dieser nicht gattungsgemäße Stand der Technik weist jedoch auch nicht unerhebliche Nachteile auf, die bislang jedoch als akzeptabel bzw. als notwendige Einschränkung beim Betrieb von Abfüllvorrichtungen hingenommen wurden. Einer dieser Nachteile ist die sich im Betrieb längende Kette, welche die Positionierung der Behälter unter den einzelnen Arbeitsstationen erschwert. Die Kettenlängung erfordert neben einer regelmäßigen Anpassung der Grundeinstellungen insbesondere eine separate Positionierhilfe an fast jeder Arbeitsstation, um eine exakte Behandlung der Behälter zu gewährleisten.

Ein weiterer wesentlicher Nachteil sind die erforderlichen, massiv gestalteten Antriebselemente, die ein erhebliches Gewicht aufweisen und durch die zu beschleunigenden Massen entsprechend ausgelegter Antriebe, Führungen etc. benötigen. In Summe ist die Maschine selbst außerordentlich schwer, es ist eine Vielzahl hochwertiger und teurer Komponenten zu verbauen und im Wartungsfall zu demontieren bzw. auszutauschen. Dies verursacht nicht nur bei der Herstellung und Wartung nicht unerhebliche Material- und Teilekosten. Es sind auch erhebliche Produktionsausfallzeiten zu akzeptieren, wenn die Anlage gewartet wird..

Es wurden deswegen immer wieder Versuche unternommen, Abfüllvorrichtungen mit "kettenlosem Antrieb" zu konstruieren, da diese zumindest theoretischen Überlegungen nach eine Vielzahl der vorgenannten Nachteile nicht kennen.

Die Erfindung selbst betrifft eine solche "kettenlose" Abfüllvorrichtung, wobei kettenlos hier meint, dass die Tragelemente nicht über ein endlos geführtes Antriebsglied, wie Kette, aneinander angeordnet sind.

Eine gattungsgemäße Vorrichtung ist beispielsweise aus EP 1 495 997 B1 in verschiedenen Ausführungsformen bekannt.

Neben Ausführungsformen, bei welchen die Tragelemente auf Rollen oder Rädern entlang der Trümmer geführt sind, offenbart EP 1 495 997 B1 auch solche, bei welchen die Tragelemente auf einer Gleitschienen mit ihren Stirnflächen aneinanderliegend entlang der Trümmer geschoben werden. In den Figuren 10 und 11 der EP 1 495 997 B1 sind Seitentrümmer in Form von Elevatoren dargestellt, die die Tragelemente vom Obertrum ins Untertrum und zurück versetzen. Hierbei wird ein Tragelement aus dem jeweiligen Trum ausgekoppelt und eine Elevatoraufnahme an dessen Position in das Trum eingekoppelt. Die Aufnahme weist einen Freiraum auf, in den bei der nächsten Vorschubbewegung das folgende Tragelement hineingedrückt wird.

Die in Form eines Elevators ausgebildeten Seitentrümmer haben einen nicht unerheblichen Vorteil. Mit ihnen lassen sich die Tragelemente in Untertrum eingliedern, ohne dass die für die Behälteraufnahme vorgesehene Oberseite des Tragelementes im Untertrum seine Ausrichtung wechselt.

Die in EP 1 495 997 B1 skizzenhaft dargestellte Lösung weist jedoch einen nicht unerheblichen Nachteil auf. Der Verbund zwischen den Zellenbrettern ist durch das am Trumende ausgegliederte Zellenbrett aufgelöst. Eine kontrollierte Beschleunigung und kontrollierte Verzögerung der im Untertrum oder Obertrum befindlichen Zellenbretter ist nicht länger gewährleistet. Untertrum und Obertrum bilden in der Regel die Haupttrümer der Vorrichtung, in denen Arbeitsstationen angeordnet sein können.

In der bislang unveröffentlichten PCT/DE2009/001752 der Anmelderin sind auf einem Rahmen angeordnete Tragelemente offenbart, wobei die Rahmen untereinander durch rahmeneigene Befestigungselemente miteinander verbunden sind, so dass der Verbund der in den Haupttrümmern angeordneten Tragelemente erhalten bleibt.

Aufgabe der Erfindung ist es, eine alternative Vorrichtung zum Befüllen von Behältern zu schaffen, bei welcher auch untereinander unverbundene Tragelemente in den Haupttrümmern kontrolliert beschleunigt und verzögert werden können.

Gelöst wird die Aufgabe der Erfindung durch eine Vorrichtung mit den Merkmalen des Anspruches 1, insbesondere mit den kennzeichnenden Merkmalen, wonach der Verbund der Tragelemente untereinander im Obertrum und/oder im Untertrum über den gesamten Bewegungsweg entlang des Trums aufrechterhalten ist und dass die Bewegung der Tragelemente im Obertrum und/oder Untertrum unter Aufrechterhaltung des Verbundes untereinander kontrolliert beschleunigbar und verzögerbar ist.

Der Vorteil der erfindungsgemäß weitergebildeten Vorrichtung liegt insbesondere darin, dass durch Aufrechterhaltung des geschlossenen Verbundes der untereinander nicht gekoppelten Tragelemente die kontrollierte Beschleunigung und kontrollierte Verzögerung der Tragelemente im jeweiligen Haupttrum erhalten bleibt. Insbesondere vor dem Hintergrund der bei bis zu 60 Vorschubtakten in der Minute auftretenden hohen Beschleunigungen und Verzögerungen in den derzeit betriebenen Abfüllvorrichtungen wird deutlich, dass nur eine erfindungsgemäß ausgestaltete, "kettenlose" Abfüllvorrichtung der erfindungsgemäßen Aufgabe genügt.

Bei einer besonders bevorzugten Ausführungsform ist vorgesehen, dass die kontrollierte Beschleunigung der Tragelemente mittels eines Antriebs und die kontrollierte Verzögerung mittels einer Bremseinrichtung erfolgt, wobei insbesondere vorgesehen ist, dass der Antrieb gegen die Bremseinrichtung arbeitet und der Verbund der Tragelemente untereinander durch die Gegeneinander wirkenden Kräfte von Antrieb und Bremseinrichtung aufrechterhalten ist.

Durch die Nutzung eines Antriebs und einer Bremseinrichtung ist gewährleistet, dass keines der Tragelemente sich gegen die Bremseinrichtung aus dem Verbund in einem der Haupttrümmer löst und sich unkontrolliert im Trum bewegt.

Es ist möglich, dass die Bremseinrichtung aktiv steuerbar ist und beispielsweise als auf die Tragelemente wirkende Wirbelstrombremse oder als auf die Tragelemente wirkender Servomotor ausgebildet ist.

Besonders bevorzugt ist es, wenn der Antrieb auf das in Förderrichtung gesehen erste Tragelement und die Bremseinrichtung auf das in Förderrichtung letzte Tragelement des Trums wirkt.

Bei dieser Ausführungsform reicht zur Aufrechterhaltung des Verbunds der Tragelemente im Haupttrum neben einem einzigen Antrieb eine einzige Bremseinrichtung aus.

Der dahinterstehende Gedanke ist, dass die Tragelemente durch die gegeneinander wirkenden Kräfte von Antrieb und Bremseinrichtung in einer Art Pressverbund gehalten sind.

Als Folge der Anordnung von Antrieb und Bremseinrichtung folgt, dass das jeweilige Seitentrum vor dem Antrieb bzw. hinter der Bremseinrichtung in das Ober- und/oder Untertrum übergeht. Durch diese Ausbildung der Erfindung ist darüber gewährleistet, dass die Tragelemente unabhängig vom geforderten Verbundzustand im Haupttrum zwischen den Trümmern verfahren werden können.

Von besonderem Vorteil bei den hohen Beschleunigungs- und Verzögerungskräften ist es, wenn Antrieb und Bremseinrichtung ein formschlüssig in dass jeweilige Tragelement eingreifendes Wirkelement aufweisen.

Bevorzugt ist dabei, dass das Wirkelement ein Zahnrad ist, welches zur kontrollierten Beschleunigung oder Verzögerung formschlüssig in eine Zahnleiste des Tragelementes eingreift.

Es ist weiterhin vorgesehen, dass das Obertrum und oder Untertrum Niederhalter aufweisen, die ein Aufbäumen der Tragelemente bei der kontrollierten Beschleunigung oder Verzögerung verhindern.

Dieses ist insbesondere immer dann erforderlich, wenn das Gewicht der Tragelemente nicht ausreichend ist um den Beschleunigungs- und Verzögerungskräften von Antrieb und Bremseinrichtung standzuhalten.

Schließlich ist zur Reibungsminimierung vorgesehen, dass die Tragelemente auf Rollen durch die Vorrichtung geführt sind.

Ein besseres Verständnis der Erfindung sowie weitere Vorteile und Merkmale gehen aus der nachfolgenden Beschreibung eines Ausführungsbeispiels hervor. Es zeigen:
- Fig. 1: Eine vereinfachte Gesamtansicht der erfindungsgemäßen Vorrichtung,
- Fig. 2: eine Teilansicht der erfindungsgemäßen Vorrichtung,
- Fig. 3: ein Vertikalschnitt durch die Vorrichtung gemäß Figur 2,
- Fig. 4: eine Ausschnittsvergrößerung aus der Ansicht gemäß Figur 3.

In den Figuren ist eine erfindungsgemäße Vorrichtung insgesamt mit der Bezugsziffer 10 versehen.

Bei der Vorrichtung 10 handelt es sich um eine Abfüllvorrichtung für dünnflüssige für pas töse Nahrungsmittel wie beispielsweise Margarine, Milchprodukte oder Säfte.

Die Vorrichtung 10 weist, bezogen auf eine Aufstellfläche ein horizontales Obertrum OT sowie ein horizontales Untertrum UT auf. Obertrum OT und Untertrum UT werden im Folgenden auch als Haupttrümmer bzw. Haupttrum bezeichnet. Obertrum OT und Untertrum UT werden durch zwei Seitentrümmer ST miteinander verbunden, die vorliegend als Elevatoren ausgebildet sind.

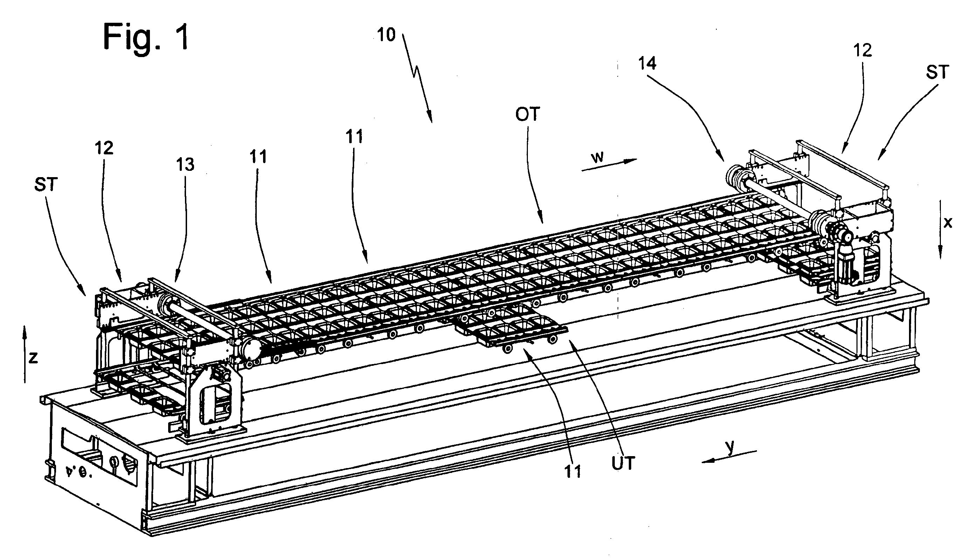

Entlang der Trümmer OT, UT und ST sind einzelne Wagen 11 endlos geführt. Diese Wagen 11 werden von den die Seitentrümmer ST bildenden Elevatoren 12 vertikal vom Obertrum OT ins Untertrum UT und wieder zurück verfahren. Im Einzelnen stellt es sich so dar, dass jeder im Obertrum OT angeordnete Wagen im Obertrum OT in Förderrichtung W vom in Figur 1 linken Elevator 12 entlang an nicht dargestellten Arbeitsstationen, wie Sterilisation, Abfüllung und Siegelung, bis zum rechten Elevator 12 bewegt wird. Dort verfährt der Elevator 12 den Wagen 11 in Vertikalrichtung X bis auf die Ebene der Untertrum UT, wo er in Horizontalrichtung Y, in Gegenrichtung zur Richtung W, zum linken Elevator 12 zurückbefördert wird. Hier wird der Wagen 11 aufgenommen und in Vertikalrichtung Z, die Gegenrichtung zur Richtung X, zurück ins Obertrum OT gefördert.

Bestandteil des linken Elevators 12 ist ein Antrieb 13, Bestandteil des rechten Elevators ist eine Bremseinrichtung 14. Jeder Wagen 11 wird durch den Antrieb 13 in Richtung W gegen die Bremseinrichtung 14 durch das Obertrum bewegt. Wie aus Figur 1 ersichtlich ist, bilden die im Obertrum OT angeordneten Wagen 11 zwischen dem Antrieb 13 und der Bremseinrichtung 14 einen geschlossenen Verbund. Das Untertrum UT weist einen solchen Verbund der Wagen 11 nicht auf. Die Wagen 11 werden im Untertrum UT verbundlos geführt.

Antrieb 13 und Bremseinrichtung 14 begrenzen das Obertrum OT. Es beginnt in Richtung W mit dem Antrieb 13 und endet in Richtung W mit der Bremseinrichtung 14. Dem Antrieb 13 vorgeschaltet bzw. der Bremseinrichtung 14 nachgeschaltet sind die Seitentrümmer ST, in welchen die Wagen 11 vertikal in Richtung X bzw. Z vom Obertrum OT ins Untertrum UT und umgekehrt verfahren werden.

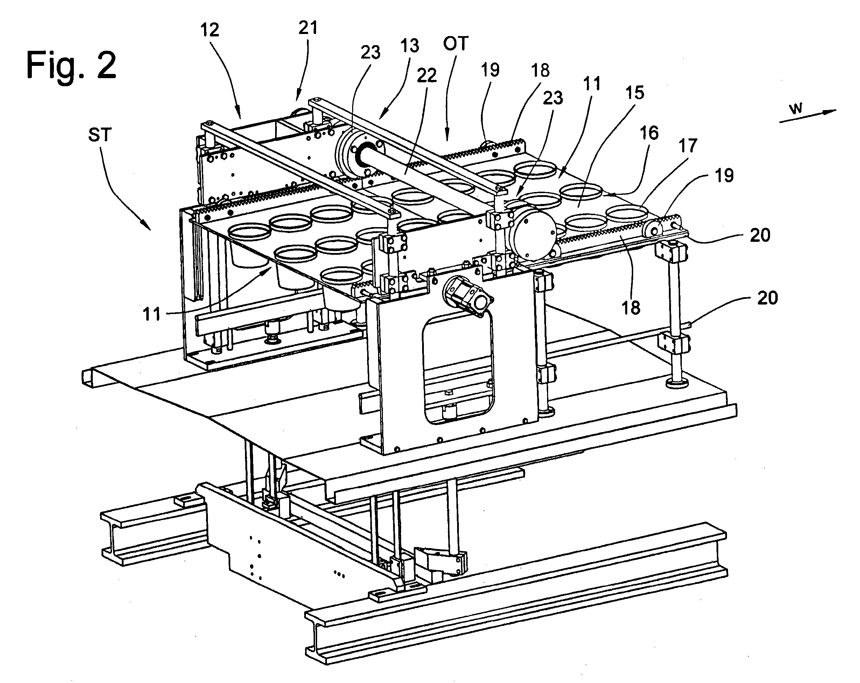

In Figur 2 ist eine Teilansicht der Vorrichtung 10 gemäß Figur 1 dargestellt. Es handelt sich um das linke Seitentrum ST mit dem Antrieb 13. Dieser Darstellung kann man zunächst den Aufbau der einzelnen Wagen 11 entnehmen. Es handelt sich um plattenartige Tragelemente 15, die quer zur Förderrichtung mit in Reihen nebeneinander angeordneten Aufnahmen 16 für einzelne Behälter 17, hier Becher, versehen sind. Jedes Tragelement 15 weist mehrere in Förderrichtung W, X, Y Z hintereinander und Bahnen bildende Aufnahmen 16 auf. In den zur Förderrichtung parallel verlaufenden Seitenbereichen der Tragelemente sind Zahnleisten 18 angeordnet, die Rollen 19 tragen.

Die Rollen 19 liegen auf Laufleisten 20 von Obertrum OT und Untertrum UT auf, auf welchen sie durch die Vorrichtung 10 entlang von Obertrum OT und Untertrum UT geschoben werden.

Der Antrieb 13 umfasst zunächst einen Motor 21, der zwei über eine Achse 22 miteinander rotationsverbundene Zahnräder 23 antreibt. Die Zahnräder 23 selbst greifen in die Zahnleisten 18 der Wagen 11 ein, um selbige im Falle des Antriebs 13 zu beschleunigen.

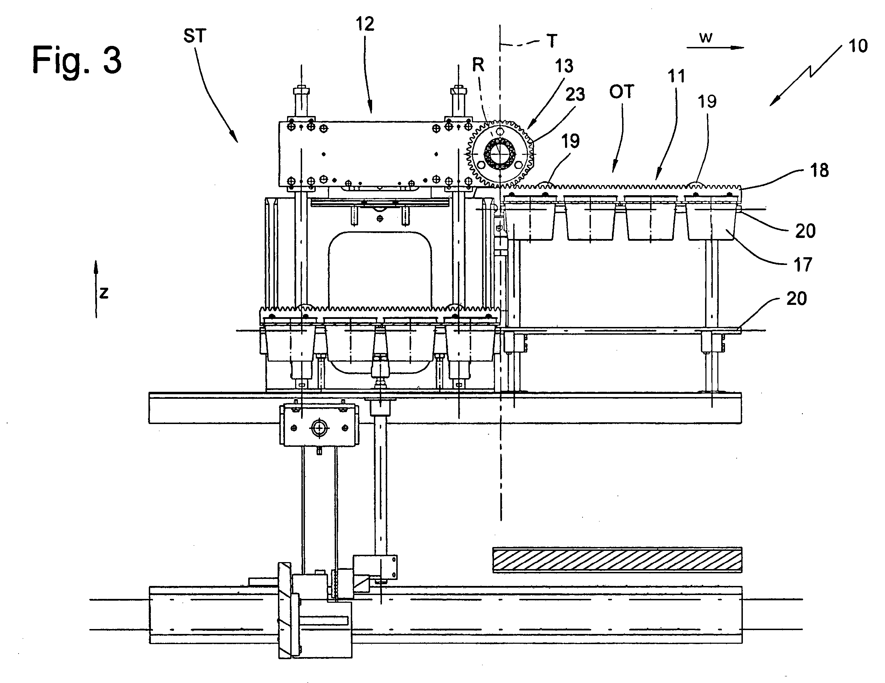

Figur 3 zeigt einen Vertikalschnitt durch die Vorrichtung 10 gemäß Figur 2. Figur 3 zeigt in Folge dessen ebenfalls den linken Teilbereich der in Figur 1 in ihrer Gesamtheit dargestellten Vorrichtung 10. Wie dieser Darstellung zu entnehmen ist, ist die Rotationsachse R der die Zahnräder 23 verbindenden Achse 22 unmittelbar in der vertikalen Trennebene T zwischen Seitentrum ST und Untertrum UT angeordnet.

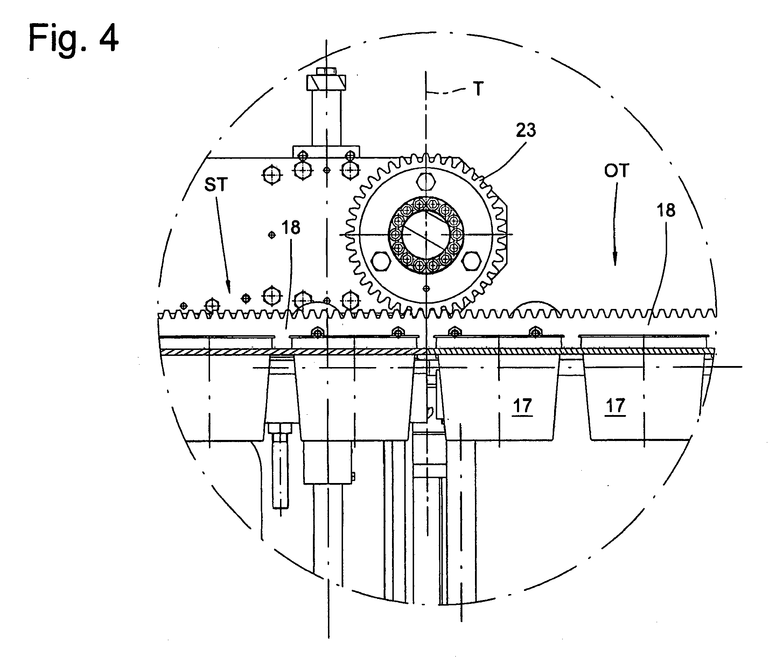

Der Umfang des Zahnrades 23 ist so bemessen, dass es sowohl in die Zahnleiste 18 des in Förderrichtung W ersten Wagens 11 des Obertrums OT eingreift, als auch in die Zahnleiste 18 eines im Seitentrum ST auf Höhe des Obertrums OT gehaltenen Wagens 11 eingreifen kann. Dieser Sachverhalt lässt sich insbesondere auch aus Figur 4 entnehmen, welche eine Ausschnittsvergrößerung der Figur 3 mit Blick auf das Zahnrad 23 ist.

In hier nicht näher zu beschreibender Weise wird zunächst ein Wagen 11 aus der Horizontalebene des Untertrums UT in die Horizontalebene des Obertrums OT verbracht. In Förderrichtung W ist dieser Wagen 11 somit vor dem ersten Wagen 11 des Obertrums OT angeordnet. Das Zahnrad 23 greift sowohl in die Zahnleiste 18 des ersten im Obertrum OT eingegliederten Wagens 11 als auch in dem vorgenannten Wagen 11 des Seitentrums ST ein.

Durch Rotation des Zahnrades wird der auf Höhe des Obertrums OT angeordnete Wagen 11 des Seitentrums ST sowie der erste Wagen 11 des Obertrums OT in Förderrichtung W bewegt. Dabei drückt der jeweils in Förderrichtung W angeordnete erste Wagen alle übrigen Wagen des Obertrums OT in Förderrichtung W. Mit dem Antrieb 13 ist somit eine kontrollierte Beschleunigung der Wagen 11 im Obertrum OT möglich.

Von Vorteil ist hier der formschlüssige Eingriff des Zahnrades 23 in die Zahnleiste 18 der Wagen 11 sowie die Anordnung des Zahnrades bzgl. der Aufstellebene der Vorrichtung 10 oberhalb der Zahnleisten 18. So besteht einerseits die Möglichkeit den im Seitentrum ST befindlichen Wagen 11 von unten her in Richtung Z an den Antrieb 13 anzugliedern. Andererseits dient die Laufleiste 20 des Obertrums OT unterhalb des Zahnrades 23 als Widerlager. In Folge dessen besteht nicht die Gefahr, dass die Zahnleisten 18 unterhalb des Zahnrades 23 hinwegtauchen.

Die Bremsvorrichtung 14 ist bildlich nicht dargestellt. Man kann sich vorstellen, dass die Darstellung des Figur 3 an einer Vertikalachse, die zur Trennebene T parallel verläuft, gespiegelt ist, so dass das Zahnrad 23 in Förderrichtung W vor dem Elevator 12 des in Figur 1 dargestellten rechten Seitentrums ST angeordnet ist. Somit wirkt das Zahnrad 23 der Bremseinrichtung 14 auf den in Förderrichtung W letzten Wagen 11 des Obertrums OT, insbesondere durch Eingriff in dessen Zahnleiste 18. Die Bremseinrichtung 14 wirkt gegen die Antriebsbewegung des Antriebs 13 in Förderrichtung W. Hierdurch ist gewährleistet, dass im Obertrum OT die Wagen 11 mit ihren in Förderrichtung W bzw. in Förderrichtung Y zueinander gewandten Stirnflächen aneinander anliegen. Die Bremseinrichtung 14 kann somit gegen den Vortrieb des Antriebs 13 kontrolliert verzögern.

Durch die gegeneinander wirkenden Kräfte von Antrieb 13 und Bremseinrichtung 14 werden die Wagen 11 des Obertrums OT in einer Art Pressverbund gehalten. Nicht dargestellte Niederhalter oder Führungen nehmen die Wagen 11 zwischen sich und der Laufleiste 20 des Obertrums OT auf, um ein Aufbäumen derselben durch die gegeneinander gerichteten Antriebs- und Verzögerungskräfte zu verhindern.

Die Bremseinrichtung 14 kann sowohl aktiv wie passiv ausgestaltet sein. Eine passive Bremseinrichtung 14 weist eine vordefinierte Verzögerungskraft auf, wobei diese über den Verlauf der Vorschubbewegung eines Arbeitstaktes der Vorrichtung 10 durchaus unterschiedlich stark sein kann. Es ist jedoch auch vorstellbar und vorteilhaft, eine aktiv geregelte Bremseinrichtung 14 vorzusehen, die in Abhängigkeit von bestimmten Betriebsparametern im laufenden Betrieb bevorzugt über eine automatische Steuerung angepasst werden kann.

Zusammenfassend wurde eine Abfüllvorrichtung für Nahrungsmittel dargestellt, deren Wagen 11 im Obertrum OT über die gesamte Bewegung W einen zusammenhängenden Verbund in Form eines Pressverbundes bilden und so kontrolliert beschleunigbar und verzögerbar sind. Der Pressverbund wird erreicht durch einen den Beginn des Obertrums OT definierenden Antrieb, der gegen eine das Ende des Obertrums OT bildende Bremseinrichtung wirkt. Antrieb 13 und Bremseinrichtung 14 rahmen somit das Obertrum OT ein. Hier wird davon ausgegangen, dass die Arbeitsstationen im Obertrum angeordnet sind. Eine äquivalente Lösung kann sein, die Bremseinrichtung 14 und den Antrieb 13 zusätzlich oder alternativ im Untertrum UT vorzusehen, wenn dort ein entsprechender Verbund notwendig ist.

Eine Besonderheit der Vorrichtung 10 sind die die Wagen 11 in Vertikalrichtung zwischen Obertrum OT und Untertrum UT verfahrenden Elevatoren 12, die ein in Förderrichtung W ungehindertes Entnehmen der Wagen 11 aus der Vorrichtung 10 gestatten. Dies erleichtert den sogenannten Formatwechsel, also den Einsatz von Wagen 11 mit Tragelementen 15 für Behälter 17 anderer Form und Größe erheblich, da keine Aggregate des Seitentrums ST demontiert werden müssen.

Eine weitere Besonderheit der Vorrichtung 10 ist, dass die Wagen 11 im nicht mit Arbeitsstationen versehenen Untertrum UT unverbunden geführt sind. Dies kann beispielsweise durch einen in die Wagen 11 eingreifenden Zahnriemen erfolgen.

### Bezugszeichenliste:

- 10: Vorrichtung
- 11: Wagen
- 12: Elevator
- 13: Antrieb
- 14: Bremseinrichtung
- 15: Tragelement
- 16: Aufnahme
- 17: Behälter
- 18: Zahnleiste
- 19: Rolle
- 20: Laufleiste
- 21: Motor
- 22: Achse
- 23: Zahnrad

- OT: Obertrum
- UT: Untertrum
- ST: Seitentrum
- R: Rotationsachse
- T: Trennebene
- w: Richtung
- x: Richtung
- y: Richtung
- z: Richtung

## Patentansprüche

1. Vorrichtung (10) zum Befüllen von Behältern (17), insbesondere von Flaschen oder Bechern, mit Nahrungs- und Genussmitteln, insbesondere mit dünnflüssigen bis pastösen Molkerei- und Fettprodukten, Säften, Wässern oder dergleichen,
- mit einem Obertrum (OT), einem Untertrum (UT) und mit Ober- und Untertrum verbindenden Seitentrümern (ST),
- mit einer Vielzahl von endlos antriebsmittelfrei aneinander angeordneten Tragelementen (15), die endlos durch die Vorrichtung (10) vorbei an Arbeitstationen und entlang der Trümer (OT, UT, ST) geführt sind und deren Verbund untereinander wegen der Führung entlang zumindest eines Seitentrums (ST) aufgelöst ist, **dadurch gekennzeichnet, dass**
- der Verbund der Tragelemente (15) untereinander im Obertrum (OT) und/oder im Untertrum (UT) über den gesamten Bewegungsweg entlang des Trums (OT, UT) aufrechterhalten ist und dass
- die Bewegung der Tragelemente (15) im Obertrum (OT) und/oder Untertrum (UT) unter Aufrechterhaltung des Verbundes untereinander kontrolliert beschleunigbar und verzögerbar ist.

2. Vorrichtung nach Anspruch 1, **dadurch gekennzeichnet, dass** die kontrollierte Beschleunigung der Tragelemente (15) mittels eines Antriebs (13) und die kontrollierte Verzögerung mittels einer Bremseinrichtung (14) erfolgt.

3. Vorrichtung nach Anspruch 2, **dadurch gekennzeichnet, dass** die Bremseinrichtung (14) aktiv steuerbar ist und beispielsweise als auf die Tragelemente (15) wirkende Wirbelstrombremse oder als auf die Tragelemente (15) wirkender Servomotor ausgebildet ist.

4. Vorrichtung nach Anspruch 2 oder 3, **dadurch gekennzeichnet, dass** der Antrieb (13) auf das in Förderrichtung gesehen erste Tragelement (15) und die Bremseinrichtung auf das in Förderrichtung letzte Tragelement (15) des Trums wirkt.

5. Vorrichtung nach einem der Ansprüche 2 bis 4, **dadurch gekennzeichnet, dass** der Antrieb (13) gegen die Bremseinrichtung (14) arbeitet und der Verbund der Tragelemente (15) untereinander durch die Gegeneinander wirkenden Kräfte von Antrieb (13) und Bremseinrichtung (14) aufrechterhalten ist.

6. Vorrichtung nach einem der Ansprüche 2 bis 5, **dadurch gekennzeichnet, dass** das jeweilige Seitentrum (ST) vor dem Antrieb (13) bzw. hinter der Bremseinrichtung (14) in das Ober- und/oder Untertrum (OT, UT) übergeht.

7. Vorrichtung nach einem der Ansprüche 2 bis 6, **dadurch gekennzeichnet, dass** Antrieb (13) und Bremseinrichtung (14) ein formschlüssig in dass jeweilige Tragelement (15) eingreifendes Wirkelement aufweisen.

8. Vorrichtung nach Anspruch 7, **dadurch gekennzeichnet, dass** das Wirkelement ein Zahnrad (23) ist, welches zur kontrollierten Beschleunigung oder Verzögerung formschlüssig in eine Zahnleiste (18) des Tragelementes (15) eingreift.

9. Vorrichtung nach einem der vorhergehenden Ansprüche, **dadurch gekennzeichnet, dass** Obertrum (OT) und oder Untertrum (UT) Niederhalter aufweisen, die ein Aufbäumen der Tragelemente (15) bei der kontrollierten Beschleunigung oder Verzögerung verhindern.

10. Vorrichtung nach einem der vorhergehenden Ansprüche, **dadurch gekennzeichnet, dass** die Tragelemente (15) auf Rollen (19) durch die Vorrichtung (10) geführt sind.

## Claims

1. Apparatus (10) for filling containers (17), particularly bottles or tubs, with food or semi-luxury items, particularly highly fluid to pasty dairy and fat-based products, juices, mineral waters or the like,
- said apparatus having an upper strand (OT), a lower strand (UT) and having lateral strands (ST) that connect the upper and lower strands;
- having a large number of carrying elements (15) which are arranged in contact with one another in a continuous manner and without driving means and are conveyed continuously through the apparatus (10) past work stations and along the strands (OT, UT, ST) and whose interconnection with one another is interrupted on account of being conveyed along at least one lateral strand (ST);
**characterised in that**
- the interconnection of the carrying elements (15) with one another is maintained within the upper strand (OT) and/or within the lower strand (UT) over the entire path of movement along the strand (OT, UT), and that
- the movement of the carrying elements (15) within the upper strand (OT) and/or lower strand (UT) can be accelerated and decelerated in a controlled manner while maintaining the interconnection with one another.

2. Apparatus according to Claim 1, **characterised in that** the controlled acceleration of the carrying elements (15) takes place by means of a drive (13), and the controlled deceleration by means of a braking device (14).

3. Apparatus according to Claim 2, **characterised in that** the braking device (14) can be controlled in an active manner and is constructed, for example, as an eddy current brake acting on the carrying elements (15) or as a servo motor acting on said carrying elements (15) .

4. Apparatus according to Claim 2 or 3, **characterised in that** the drive (13) acts on the first carrying element (15), viewed in the direction of conveyance, and the braking device acts on the last carrying element (15), viewed in the direction of conveyance, of the strand.

5. Apparatus according to one of Claims 2 to 4, **characterised in that** the drive (13) operates counter to the braking device (14) and the interconnection of the carrying elements (15) with one another is maintained by the forces, which act counter to one another, of the drive (13) and braking device (14).

6. Apparatus according to one of Claims 2 to 5, **characterised in that** the respective lateral strand (ST) passes over into the upper and/or lower strand (OT, UT) upstream of the drive (13) or downstream of the braking device (14).

7. Apparatus according to one of Claims 2 to 6, **characterised in that** the drive (13) and braking device (14) have an active element that engages in the respective carrying element (15) in a form-locking manner.

8. Apparatus according to Claim 7, **characterised in that** the active element is a toothed wheel (23) which engages in a form-locking manner, for controlled acceleration or deceleration purposes, in a toothed strip (18) belonging to the carrying element (15).

9. Apparatus according to one of the preceding claims, **characterised in that** the upper strand (OT) and/or lower strand (UT) have/has holding-down devices which prevent the carrying elements (15) from tilting upwards in the course of controlled acceleration or deceleration.

10. Device according to one of the preceding claims, **characterised in that** the carrying elements (15) are conveyed through the apparatus (10) on rollers (19).

## Revendications

1. Dispositif (10) pour le remplissage de récipients (17), en particulier des bouteilles ou des pots, avec des produits alimentaires et des produits d'agrément, en particulier avec des produits laitiers et gras, liquides à pâteux, des jus, des eaux ou similaires, avec un brin supérieur (OT), un brin inférieur (UT) et avec des brins latéraux (ST) reliant le brin supérieur et le brin inférieur, et avec une multitude d'éléments de support (15) disposés les uns contre les autres, sans moyen d'entraînement et sans fin qui sont guidés, sans fin, à travers le dispositif (10), en passant par des postes de travail et le long des brins (OT, UT, ST), et dont l'assemblage les uns sous les autres est désassemblé à cause du guidage le long d'au moins un brin latéral (ST), **caractérisé en ce que** l'assemblage des éléments de support (15) les uns sous les autres est maintenu debout dans le brin supérieur (OT) et/ou dans le brin inférieur (UT) au-dessus de tout le chemin de mouvement le long du brin (OT, UT) et **en ce que** le mouvement des éléments de support (15) peut être accéléré et ralenti de manière contrôlée dans le brin supérieur (OT) et/ou le brin inférieur (UT) en maintenant l'assemblage entre eux.

2. Dispositif selon la revendication 1, **caractérisé en ce que** l'accélération contrôlée des éléments de support (15) est effectuée à l'aide d'un entraînement (13) et le ralentissement contrôlé, à l'aide d'un dispositif de freinage (14).

3. Dispositif selon la revendication 2, **caractérisé en ce que** le dispositif de freinage (14) peut être piloté activement et par exemple, en tant que frein à courants parasites agissant sur les éléments de support (15) ou en tant que servomoteur agissant sur les éléments de support (15).

4. Dispositif selon la revendication 2 ou 3, **caractérisé en ce que** l'entraînement (13) agit sur le premier élément de support (15) vu dans le sens de transport, et le dispositif de freinage, sur le dernier élément de support (15), dans le sens de transport, du brin.

5. Dispositif selon l'une des revendications 2 à 4, **caractérisé en ce que** l'entraînement (13) travaille contre le dispositif de freinage (14) et que l'assemblage des éléments de support (15) entre eux est maintenu par les forces, agissant de façon opposée, de l'entraînement (13) et du dispositif de freinage (14).

6. Dispositif selon l'une des revendications 2 à 5, **caractérisé en ce que** le brin latéral (ST) respectif, devant l'entraînement (13) ou derrière le dispositif de freinage (14), se change en brin supérieur et/ou inférieur (OT, UT).

7. Dispositif selon l'une des revendications 2 à 6, **caractérisé en ce que** l'entraînement (13) et le dispositif de freinage (14) présentent un élément actif venant en prise de façon solidaire dans l'élément de support (15) respectif.

8. Dispositif selon la revendication 7, **caractérisé en ce que** l'élément actif est une roue dentée (23), laquelle est en prise pour l'accélération ou le ralentissement à contrôler, de façon solidaire, dans une crémaillère (18) de l'élément de support (15).

9. Dispositif selon l'une des précédentes revendications, **caractérisé en ce que** le brin supérieur (OT) et/ou le brin inférieur (UT) présentent des serre flans qui empêchent les éléments de support (15) de se cabrer lors de l'accélération ou le ralentissement contrôlé.

10. Dispositif selon l'une des précédentes revendications, **caractérisé en ce que** les éléments de support (15) sont guidés sur des rouleaux (19) à travers le dispositif (10).
